# EUROPÄISCHE PATENTSCHRIFT

(11) **EP 2 863 087 B1**
(45) Veröffentlichungstag und Bekanntmachung des Hinweises auf die Patenterteilung: **07.03.2018**
(21) Anmeldenummer: 13290247.9
(22) Anmeldetag: 16.10.2013
(51) Int. Cl.: B60G 11/27, B61F 5/10, F16F 9/05, F16F 9/04

(54) **Luftfeder mit Gleitelement**
Airspring with sliding sheet
Suspension pneumatique avec élément glissant

(43) Veröffentlichungstag der Anmeldung: 22.04.2015
(73) Patentinhaber: Contitech France, 92631 Gennevilliers Cedex (FR)
(72) Erfinder: Racine, Jérôme, 95170 Deuil-La-Barre (FR)
(74) Vertreter: Kilsch, Armin Ralph

(56) Entgegenhaltungen:
- DE-B- 1 264 877
- DE-U- 1 914 391
- FR-A- 1 424 313
- JP-A- 2010 221 915

## Beschreibung

Die Erfindung betrifft eine Balgluftfeder mit zwei oder mehreren als Falte oder Wulst ausgebildeten Balgteilen, die durch um den Luftfederbalg gelegte Ringe, insbesondere Metallringe getrennt sind, wobei die Balgluftfeder mit Hilfe von Anschlussteilen zwischen gefederter und ungefederter Masse befestigt ist und wobei der Balg zwischen den Anschlussteilen oder die Falten oder Wülste des Balges zwischen oder neben den Ringen ballonartig nach außen hervortreten.
Solche Balgluftfeder oder Faltenbalgluftfedem sind im Stand der Technik bekannt. So offenbart die DE 12 64 877 eine Faltenbalgluftfeder, die in ihrem Mittelteil durch einen Gürtelring eingeschnürt ist. Der Gürtelring besteht aus einem Mantel aus Gummi und einer Einlage aus Drähten für die Aufnahme der Zugkräfte. Die Einlage ist im inneren Teil des Ringquerschnittes angeordnet. Der Gürtelring soll einen vorzeitigen Verschleiß des Faltenbalges im Bereich des Gürtelringes unterbinden, da der Gürtelring nachgiebig ist und den Verformungen folgen kann, wenn sich die Falten des Faltenbalges an den Ring anlegen. Es ist jedoch festzustellen, dass bei einer Anlage einer Falte an den Gürtelring Gummi an Gummi reiben kann und es somit insbesondere, wenn Querkräfte auf die Feder einwirken, zu der gleichen Abnutzung durch Reibung kommen kann, als wenn die Falten direkt aneinander reiben würden.
Die DE 1 914 391 U offenbart eine Balgluftfeder mit zwei oder drei durch metallische Zwischenringe getrennten Wülsten, bei der die Zwischenringe durch metallische Lochplatten gebildet werden, die den Querschnitt einer liegenden Acht besitzen, um eine bessere Zentrierung und eine bessere Querstabilität der Luftfeder zu erreichen.

Balgluftfedern oder Faltenbalgluftfedem herkömmliche Bauart besitzen den Nachteil, dass unter starker Belastung und unter auf die Luftfeder wirkenden Querkräften benachbarte Wülste oder Falten entweder miteinander in Berührung und damit in einen Reibkontakt geraten oder aber mit anliegenden Anschlussteilen. So kann eine Berührung zwischen benachbarten Wülsten oder Falten insbesondere bei Faltenbalgluftfedem für Straßenbahnen oder Schienenfahrzeuge auftreten, die eine nur relativ geringe Einbauhöhe aufweisen dürfen. Die hier entstehende Reibpaarung kann dazu führen, dass sich die entsprechend in Kontakt stehenden Balgteile stark erwärmen und dann einem erhöhten Reibverschleiß unterworfen sind. Dies kann im Extremfall dazu führen, dass Teile der als Verstärkungselemente in der Balgwand angeordneten Gewebelagen freigelegt werden.

Die DE 475626 C offenbart eine Luftfeder für ein Kraftfahrzeug, bei der die Metallringe aus Ringplatten einer solchen Breite bestehen, dass die Ringplatten bei Belastung die einzelnen Schlauchabschnitte oder Wülste vollständig abstützen können, ohne das benachbarte Wülste miteinander in Berührung kommen. Die genannten Probleme des Reibverschleißes werden hier etwas zwar gemindert durch die lediglich zwischen Gummi und Metall auftretende Reibung, aber bei Weitem nicht ausreichend verhindert.

Die JP 2010 221915 A beschreibt eine Balgluftfeder, die mit Hilfe von Anschlussteilen zwischen einer gefederten und ungefederten Masse angeordnet ist, die zwischen dem Balg und einem Anschlussteil Stützelemente aufweist.

Für die Erfindung bestand also die Aufgabe, eine Balgluftfederbereitzustellen, die das Problem des erhöhten Reibverschleißes an benachbarte Wülsten, Falten oder Anschlussteilen bei hohen Belastungen und Querkräften beseitigt, die dabei einfach herzustellen ist und keine zusätzlichen Anforderungen an den Bauraum stellt oder größere Aufwendungen von Zusatzteilen verlangt.

Gelöst wird diese Aufgabe durch die Merkmale des Hauptanspruchs. Weitere vorteilhafte Ausbildungen sind in den Unteransprüchen offenbart.

Dabei sind zwischen einander benachbarten Balgteilen und/oder zwischen Balgteilen und Anschlussteilen Gleitelemente, insbesondere ringförmige als Gleitscheiben ausgebildete Gleitelemente angeordnet, an die sich die Balgteile bzw. Falten oder Wülste unter oder bei entsprechender Belastung der Balgluftfeder bzw. Faltenbalgluftfeder anlegen. Durch einen stark verringerten Gleitreibungskoeffizienten vermeiden solche Gleitscheiben als Gleitelemente bei relativen Bewegungen der belasteten Wülste gegeneinander oder der Balgteile gegenüber den Anschlussteilen eine Erwärmung und einen entsprechenden Verschleiß des Balgmaterials, bei Gummi einen Abbau der Gummi-Matrix.

Eine vorteilhafte Weiterbildung besteht aus diesem Grunde auch darin, dass die Gleitelemente/ ringförmigen Gleitscheiben aus einem Material bestehen, vorzugsweise aus gleitfähigem Kunststoffmaterial, welches in der Reibpaarung mit sich selbst oder mit dem Material der Balgluftfeder /Faltenbalgluftfeder einen niedrigeren Reibkoeffizienten aufweist als das Material der Balgluftfeder /Faltenbalgluftfeder in der Reibpaarung mit sich selbst oder mit dem Material der Anschlussteile.

Eine weitere vorteilhafte Ausbildung bei eine als Faltenbalgluftfeder ausgebildeten Balgluftfeder besteht darin, dass jeweils mindestens zwei gleitend aufeinander angeordnete ringförmige Gleitscheiben, deren Innendurchmesser größer ist als der Außendurchmesser der die Falten oder Wülste trennenden Ringe, zwischen benachbarten Falten oder Wülsten angeordnet sind, an die sich die Falten oder Wülste unter Belastung der Faltenbalgluftfeder anlegen. Bei einer solchen Anordnung gleiten im wesentlichen nur noch die Gleitelement/Gleitscheiben aufeinander, wodurch die Reibung und die damit einhergehende Wärmeentwicklung noch einmal stark reduziert wird, insbesondere natürlich auch dann, wenn die gleitend aufeinander angeordneten ringförmigen Gleitscheiben oder Gleitelemente aus unterschiedlichen und in ihrer Gleitfähigkeit angepassten Materialien, vorzugsweise aus gleitfähigen Kunststoffmaterialien oder auch aus unterschiedliche gleitfähigen Kunststoffmaterialien bestehen. Solche gleitfähgen Materialien , können zum Beispiel Polytetrafluorethylen (PTFE) oder hochdichtes Polyethylen (ultra-hight density Polyethylene / PE-UHMW) sein .

Eine weitere vorteilhafte Ausbildung besteht darin, dass jeweils entweder mindestens zwei gleitend aufeinander angeordnete ringförmige Gleitscheiben oder mindestens eine Gleitscheibe und ein weiteres deckelförmiges Gleitelement zwischen Balgteilen und Anschlussteilen angeordnet sind, an die sich die Balgteile unter Belastung der Balgluftfeder bzw. Faltenbalgluftfeder anlegen. Damit lassen sich insbesondere die Anschlussbereiche, d.h. die Einspannungen der Balgluftfeder sicher gegen zu hohe Wärmebelastung durch Reibung beim Abrollen oder Anlegen der Faltenbalgluftfeder an die Anschlussteile schützen.

Eine weitere vorteilhafte Ausbildung besteht darin, dass die gleitend aufeinander angeordneten ringförmigen Gleitscheiben oder Gleitelemente radial gegeneinander oder gegeneinander drehend gleitbeweglich angeordnet sind, so dass auch auf die Balgluftfeder oder Faltenbalgluftfeder einwirkende starke oder gar oszillierende Querkräfte und Drehbewegungen oder auf den Balg einwirkende Drehmoment nicht zu Wärmebelastungen durch Reibung führen.

Eine weitere vorteilhafte Ausbildung besteht darin, dass die ringförmigen Gleitscheiben oder Gleitelemente asymmetrisch ausgebildet sind und mindestens in einem Kreissegment weitere Balgbereiche der Faltenbalgluftfeder bedecken. Das verhindert z. B. im mittleren Bereich einer Faltenbalgluftfeder, also entfernt von den Anschlussteilen, bei Belastungen ein Anlegen der Balgluftfeder an umgebende Bauteile, beispielsweise andere Fahrwerksbauteile, so dass auch hier keine Wärmebelastung durch Reibung entstehen kann.

Unterstütz wird die Verminderung unerwünschter Reibung durch weitere vorteilhafte Ausbildungen, die darin bestehen, dass die ringförmigen Gleitscheiben oder Gleitelemente im Querschnitt konkav oder konvex ausgebildet sind und/oder dass die ringförmigen Gleitscheiben oder Gleitelemente so flexibel ausgebildet sind, dass sie sich unter Belastung der Faltenbalgluftfeder an die Balgbereiche anlegen.

Einsetzen lässt eine solche erfindungsgemäße Balgluftfeder besonders gut zur Federung eines Fahrzeugfahrwerks bei dem hohe statische und dynamische Traglasten und große Querkräfte wirken, insbesondere also als Sekundärfederung eines Schienenfahrzeugs oder als Federung eines Kraftfahrzeugs. Natürlich ist die erfindungegemäße Balgluftfeder ebeso geeignet als Federung im industriellen Anwendungsbereich, d.h. als Maschinen- oder Fundamentfederung.

Anhand eines Ausführungsbeispiels soll die Erfindung näher erläutert werden. Es zeigen
- Fig. 1: eine als Faltenbalgluftfeder ausgebildete erfindungsgemäße Balgluftfeder
- Fig. 2: das Verhalten der in der Fig. 1 dargestellten Faltenbalgluftfeder bei Belastung und einwirkenden Querkräften
- Fig. 3: eine Detailvergrößerung der Faltenbalgluftfeder in Fig. 2
- Fig. 4: eine Ausführung einer erfindungsgemäßen Faltenbalgluftfeder mit asymmetrisch ausgebildeten ringförmigen Gleitscheiben
- Fig. 5: eine Ausführung einer erfindungsgemäßen Balgluftfeder für ein Schienenfahrzeug oder einen LKW ohne Wülste/Falten mit zwei Gleitelementen
- Fig. 6: eine weitere Ausführung einer erfindungsgemäßen Balgluftfeder gemäß Fig. 5 ohne Wülste/Falten mit nur einem Gleitelement
- Fig. 7: eine wiederum andere Ausführung einer erfindungsgemäßen Balgluftfeder für Schienenfahrzeuge ohne Wülste/Falten mit nur einem Gleitelement.

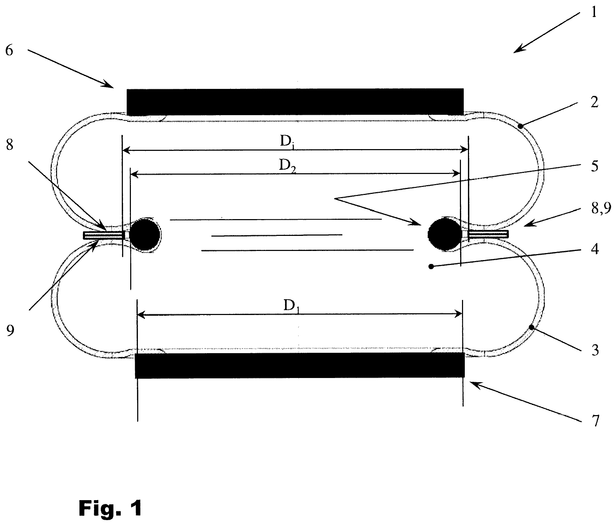

Die Fig. 1 zeigt eine als Faltenbalgluftfeder 1 ausgebildete Balgluftfeder mit zwei als Falte oder Wulst 2 und 3 ausgebildeten Balgteilen, die durch einen um den Luftfederbalg 4 gelegten Metallring 5 getrennt sind und somit zwei ballonartig rechts und links des Metallrings 5 nach außen hervortretende Balgbereiche bilden.

Die Faltenbalgluftfeder 1 ist mit Hilfe von Anschlussteilen, nämlich ausgebildet als Luftfederdeckel 6 und Luftfederfelge 7, zwischen einer hier nicht näher dargestellten gefederten und ungefederten Masse befestigt.

Zwischen den einander benachbarten Balgteilen 2 und 3 sind zwei ringförmige Gleitscheiben 8 und 9 als Gleitelemente angeordnet sind, an die sich die Balgteile unter Belastung der Faltenbalgluftfeder anlegen können.

Die zwei gleitend aufeinander angeordneten ringförmigen Gleitscheiben 8 und 9 bestehen aus PE-UHMW, einem extrem gleitfähigem Kunststoffmaterial, welches sowohl in der Reibpaarung mit sich selbst oder mit dem Material der Faltenbalgluftfeder einen wesentlich niedrigeren Reibkoeffizienten aufweist als das Material der Faltenbalgluftfeder in der Reibpaarung mit sich selbst. Der Innendurchmesser Dᵢ der Gleitscheiben 8 und 9 ist dabei größer ist als der Außendurchmesser D₂ des Metallrings 5, der zwischen den benachbarten Falten oder Wülsten 2 und 3 angeordnet ist und auch größer als der größte Außendurchmesser D₁ der Balgfelge/Luftfederfelge 7.

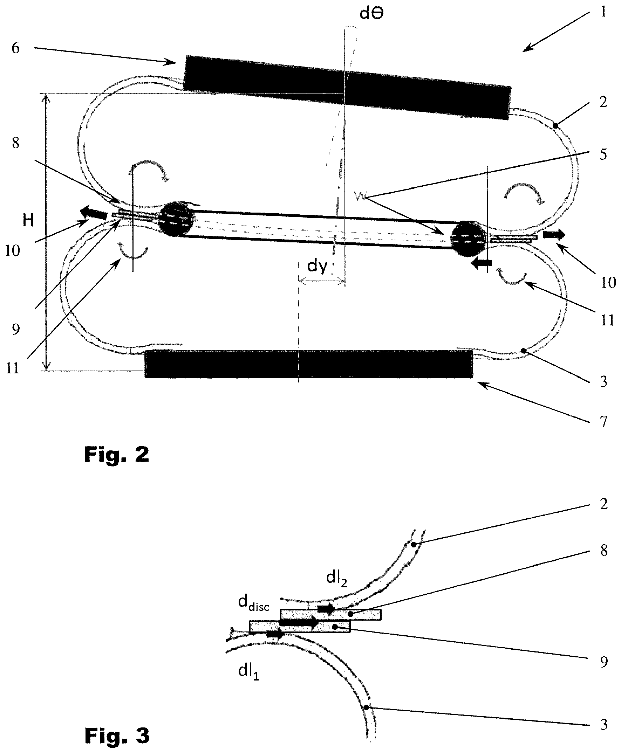

In der Zusammenschau mit der Fig. 2, die das Verhalten der in der Fig. 1 dargestellten Faltenbalgluftfeder bei Belastung und einwirkenden Querkräften zeigt, erkennt man das sich die Falten oder Wülste 2 und 3 an die Gleitscheiben 8, 9 anlegen, so dass nicht das Material der Wülste aufeinander gleitet sondern die Gleitscheiben aufeinander gleitend die laterale Verschiebung/Reibung aufnehmen. In der Fig. 2 ist dabei skizzenhaft und prinzipiell durch entsprechende Bewegungspfeile 10 eine Querkraftbelastung mit einer Verschiebung d_{y} dargestellt, der ein durch Bewegungspfeile 11 dargestelltes und auf die Faltenbalgluftfeder wirkendes Kipp-Moment mit dem Kippwinkel d_{θ} noch überlagert ist. Die ringförmigen Gleitscheiben oder Gleitelemente sind dabei radial gegeneinander gleitbeweglich angeordnet.

Beide Belastungen verursachen, wie in der Detailvergrößerung der Fig. 3 erkennbar, im Bereich der Gleitscheiben Bewegungen, nämlich die Relativbewegungen d_{disc} zwischen den Gleitscheiben und die Relativbewegungen d₁₁ und d₁₂ zwischen jeweils der Wulst 2 und der Gleitscheibe 8 und der Wulst 3 und der Gleitscheibe 9. Letztere, d.h. d₁₁ und d₁₂ sind hier nur der sachlichen Richtigkeit und der Deutlichkeit halber dargestellt, tatsächlich aber bei PE-UHMW-Gleitscheiben vernachlässigbar klein und ohne nennenswerten Effekt auf Wärmebildung durch Reibung.

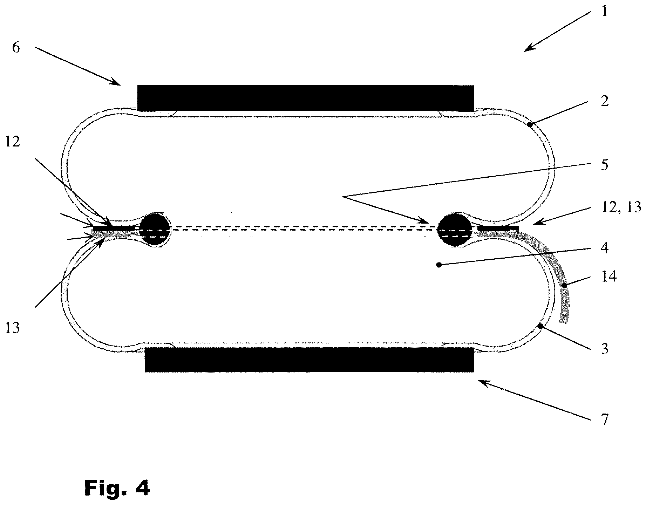

Fig. 4 zeigt eine Ausführung der erfindungsgemäßen Faltenbalgluftfeder 1, bei der die ringförmigen Gleitscheiben 12 und 13 asymmetrisch ausgebildet sind. Die untere Gleitscheibe 13 ist über ein in der Fig. 3 rechts liegendes Kreissegment mit eine Zunge 14 ausgebildet, die einen sich nach unten erstreckenden Balgbereiche der Faltenbalgluftfeder bedeckt. Das verhindert bei Belastungen ein Anlegen der Faltenbalgluftfeder an umgebende Bauteile, beispielsweise andere Fahrwerksbauteile, die hier allerdings nicht näher dargestellt sind.

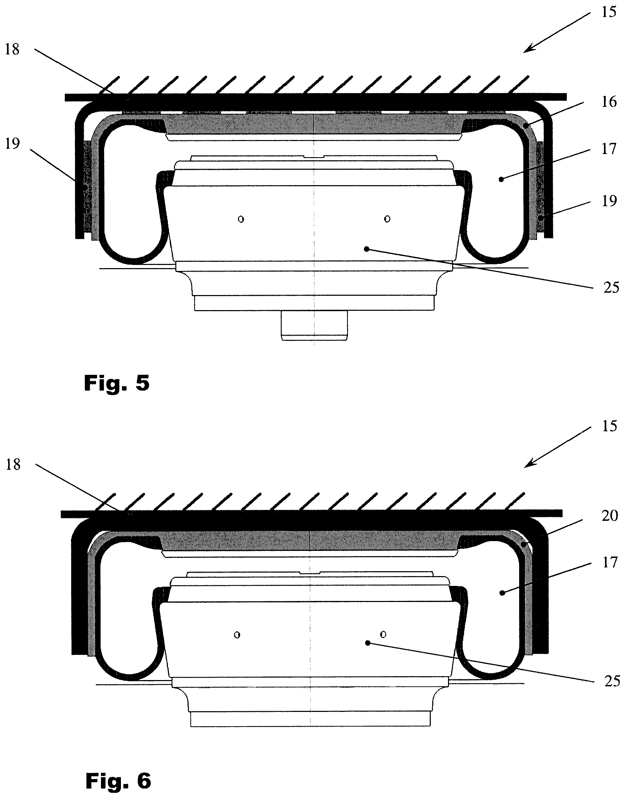

Fig. 5 zeigt eine Ausführung einer erfindungsgemäßen Balgluftfeder 15 ohne Falten für Schienenfahrzeige oder LKW, bei der ein deckelförmiges Gleitelement 16 zwischen dem Luftfederbalg 17 und dem oberen Anschlussteil, hier dem Luftfederdeckel 18 vorgesehen ist, welches auf einer und in diesem Fall zylindrisch ausgebildeten ringförmigen Gleitscheibe 19 gleitend angeordnet ist. Damit lässt sich im Bereich des Luftfederdeckels, d.h. im Einspannbereich der Balgluftfeder 15 eine zu hohe Wärmebelastung durch Reibung beim Abrollen oder Anlegen der Balgluftfeder an den Luftfederdeckel 18 sicher vermeiden. Der Luftfederbalg ist hier zwischen Luftfederdeckel 18 und Luftfederkolben 25 eingespannt.

Fig.6 zeigt eine ähnliche Ausführung wie in Fig. 5, jedoch mit lediglich einem deckelförmigen Gleitelement 20 aus PE-UHMW zwischen dem oberen Luftfederbalg 17 und dem Luftfederdeckel 18. Je nach Einsatz der Faltenbalgluftfeder ist bei dieser Materialauswahl eine zweite Gleitscheibe nicht erforderlich. Der Luftfederbalg ist auch hier zwischen Luftfederdeckel 18 und Luftfederkolben 25 eingespannt.

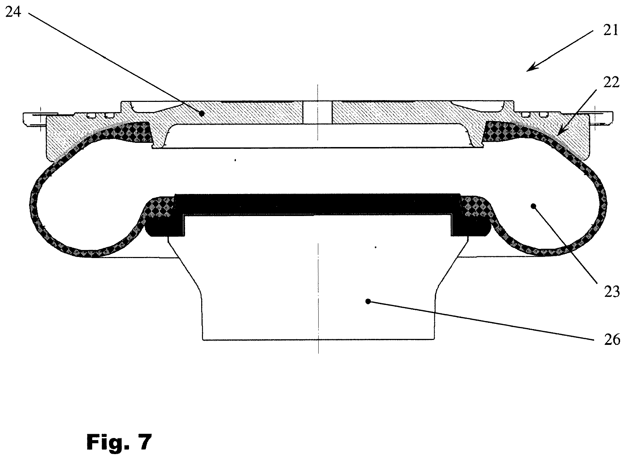

Fig. 7 zeigt stark vereinfacht eine weitere Ausführung einer Luftfeder 21 ohne Falten für Schienenfahrzeuge, die nur eine Wulst ohne Trennringe aufweist und ebenfalls mit lediglich einem deckelförmigen Gleitelement 22 aus PE-UHMW zwischen dem Luftfederbalg 23 und dem Luftfederdeckel 24 versehen ist. Auch hier ist eine zweite Gleitscheibe nicht erforderlich. Der Luftfederbalg ist hier zwischen Luftfederdeckel 24 und Luftfederfelge 26 eingespannt.

### Bezugszeichenliste

### (Teil der Beschreibung)

- 1: Faltenbalgluftfeder
- 2: Wulst/Falte
- 3: Wulst/Falte
- 4: Luftfederbalg
- 5: Metallring/Trennring
- 6: Luftfederdeckel
- 7: Luftfederfelge
- 8: Gleitscheibe/Gleitelement
- 9: Gleitscheibe/Gleitelement
- 10: Bewegungspfeil einer Verschiebung d_{y}
- 11: Bewegungspfeil einer Kippbewegung mit dem Kippwinkel d_{θ}
- 12: Gleitscheibe/Gleitelement
- 13: Gleitscheibe/Gleitelement
- 14: Zunge
- 15: Balgluftfeder ohne Falten
- 16: Gleitelement
- 17: Luftfederbalg
- 18: Luftfederdeckel
- 19: zylindrisch ausgebildeten Gleitscheibe
- 20: Gleitelement
- 21: Luftfeder
- 22: Gleitelement
- 23: Luftfederbalg
- 24: Luftfederdeckel
- 25: Luftfederkolben
- 26: Luftfederfelge

## Patentansprüche

1. Balgluftfeder (1, 15, 21) mit zwei oder mehreren als Falte oder Wulst (2, 3) ausgebildeten Balgteilen, die durch um den Luftfederbalg (4) gelegte Ringe (5), insbesondere Metallringe getrennt sind, wobei die Balgluftfeder mit Hilfe von Anschlussteilen (6, 7, 18, 24, 25, 26) zwischen gefederter und ungefederter Masse befestigt ist und wobei der Balg (17, 23) zwischen den Anschlussteilen oder die Falten oder Wülste (2, 3) des Balges zwischen oder neben den Ringen (5) ballonartig nach außen hervortreten, **dadurch gekennzeichnet, dass** zwischen einander benachbarten Balgteilen und/oder zwischen Balgteilen und Anschlussteilen ringförmige Gleitelemente (8, 9, 12, 13, 16, 20, 22), insbesondere als Gleitscheiben ausgebildete Gleitelemente angeordnet sind, an die sich die Balgteile bzw. Falten oder Wülste unter Belastung der Faltenbalgluftfeder anlegen, wobei jeweils mindestens zwei gleitend aufeinander angeordnete ringförmige Gleitscheiben (8, 9, 12, 13), deren Innendurchmesser größer ist als der Außendurchmesser der die Falten oder Wülste trennenden Ringe, zwischen benachbarten Falten oder Wülsten angeordnet sind.

2. Balgluftfeder (1, 15, 21) mit zwei oder mehreren als Falte oder Wulst (2, 3) ausgebildeten Balgteilen, die durch um den Luftfederbalg (4) gelegte Ringe (5), insbesondere Metallringe getrennt sind, wobei die Balgluftfeder mit Hilfe von Anschlussteilen (6, 7, 18, 24, 25, 26) zwischen gefederter und ungefederter Masse befestigt ist und wobei der Balg (17, 23) zwischen den Anschlussteilen oder die Falten oder Wülste (2, 3) des Balges zwischen oder neben den Ringen (5) ballonartig nach außen hervortreten, **dadurch gekennzeichnet, dass** zwischen einander benachbarten Balgteilen und/oder zwischen Balgteilen und Anschlussteilen ringförmige Gleitelemente (8, 9, 12, 13, 16, 20, 22), insbesondere als Gleitscheiben ausgebildete Gleitelemente angeordnet sind, an die sich die Balgteile bzw. Falten oder Wülste unter Belastung der Faltenbalgluftfeder anlegen, wobei jeweils entweder mindestens zwei gleitend aufeinander angeordnete ringförmige Gleitscheiben (8, 9, 12, 13) oder mindestens eine Gleitscheibe (19) und ein weiteres deckelförmiges Gleitelement (16) zwischen Balgteilen und Anschlussteilen angeordnet sind, an die sich die Balgteile unter Belastung der Faltenbalgluftfeder anlegen.

3. Balgluftfeder nach Anspruch 1 oder 2, bei der die Gleitelemente oder ringförmigen Gleitscheiben (8, 9, 12, 13, 16, 19, 20, 22) aus einem Material bestehen, vorzugsweise aus gleitfähigem Kunststoffmaterial, welches in der Reibpaarung mit sich selbst oder mit dem Material der Balgluftfeder einen niedrigeren Reibkoeffizienten aufweist als das Material der Balgluftfeder in der Reibpaarung mit sich selbst oder mit dem Material der Anschlussteile.

4. Balgluftfeder nach Anspruch 3, bei der die gleitend aufeinander angeordneten ringförmigen Gleitscheiben oder Gleitelemente (8, 9, 12, 13) radial gegeneinander oder gegeneinander drehend gleitbeweglich angeordnet sind.

5. Balgluftfeder nach einem der Ansprüche 3 oder 4, bei der die gleitend aufeinander angeordneten ringförmigen Gleitscheiben oder Gleitelemente (8, 9, 12, 13, 16, 19, 22) aus unterschiedlichen Materialien, vorzugsweise aus unterschiedlichen gleitfähigen Kunststoffmaterialien bestehen.

6. Balgluftfeder nach einem der Ansprüche 1 bis 5, bei der die ringförmigen Gleitscheiben oder Gleitelemente (12, 13) asymmetrisch ausgebildet sind und mindestens in einem Kreissegment weitere Balgbereiche der Faltenbalgluftfeder bedecken.

7. Balgluftfeder, insbesondere Faltenbalgluftfeder, nach einem der Ansprüche 1 bis 6, bei der die ringförmigen Gleitscheiben oder Gleitelemente (8, 9, 12, 13, 16, 19, 20, 22)im Querschnitt konkav oder konvex ausgebildet sind.

8. Balgluftfeder, insbesondere Faltenbalgluftfeder, nach einem der Ansprüche 1 bis 7, bei der die ringförmigen Gleitscheiben oder Gleitelemente (8, 9, 12, 13, 16, 19, 20, 22)so flexibel ausgebildet sind, dass sie sich unter Belastung der Faltenbalgluftfeder an die Balgbereiche anlegen.

9. Verwendung einer Balgluftfeder nach einem der Ansprüche 1 bis 8 zur Federung eines Fahrzeugfahrwerks, insbesondere als Sekundärfederung eines Schienenfahrzeugs oder als Federung eines Kraftfahrzeugs.

## Claims

1. Bellows-type air spring (1, 15, 21) having two or more bellows sections designed as folds or toroidal parts (2, 3), which are separated by rings (5) placed around the air spring bellows (4), more particularly metal rings, wherein the bellows-type air spring is secured between the sprung and the unsprung mass with the aid of connecting parts (6, 7, 18, 24, 25, 26) and wherein the bellows (17, 23) project outward in the manner of a balloon between the connecting parts, or the folds or toroidal parts (2, 3) of the bellows project outward in the manner of a balloon between or adjacent to the rings (5), **characterized in that** annular sliding elements (8, 9, 12, 13, 16, 20, 22), more particularly sliding elements designed as sliding discs, are arranged between adjacent bellows sections and/or between bellows sections and connecting sections, against which sliding elements the bellows sections or folds or toroidal parts come to rest when a load is applied to the folding-bellows-type air spring, wherein in each case at least two annular sliding discs (8, 9, 12, 13) arranged so as to slide on one another, the inside diameter of which is greater than the outside diameter of the rings separating the folds or toroidal parts, are arranged between adjacent folds or toroidal parts.

2. Bellows-type air spring (1, 15, 21) having two or more bellows sections designed as folds or toroidal parts (2, 3), which are separated by rings (5) placed around the air spring bellows (4), more particularly metal rings, wherein the bellows-type air spring is secured between the sprung and the unsprung mass with the aid of connecting parts (6, 7, 18, 24, 25, 26) and wherein the bellows (17, 23) project outward in the manner of a balloon between the connecting parts, or the folds or toroidal parts (2, 3) of the bellows project outward in the manner of a balloon between or adjacent to the rings (5), **characterized in that** annular sliding elements (8, 9, 12, 13, 16, 20, 22), more particularly sliding elements designed as sliding discs, are arranged between adjacent bellows sections and/or between bellows sections and connecting sections, against which sliding elements the bellows sections or folds or toroidal parts come to rest when a load is applied to the folding-bellows-type air spring, wherein in each case either at least two annular sliding discs (8, 9, 12, 13) arranged so as to slide on one another or at least one sliding disc (19) and a further cap-shaped sliding element (16) are arranged between the bellows sections and the connecting sections on which the bellows sections come to rest when a load is applied to the folding-bellows-type air spring.

3. Bellows-type air spring according to Claim 1 or 2, in which the sliding elements or annular sliding discs (8, 9, 12, 13, 16, 19, 20, 22) are composed of a material, preferably a low-friction plastics material, which, when in frictional contact with itself or with the material of the bellows-type air spring, has a lower coefficient of friction than the material of the bellows-type air spring when in frictional contact with itself or with the material of the connecting sections.

4. Bellows-type air spring according to Claim 3, in which the annular sliding discs or sliding elements (8, 9, 12, 13) arranged so as to slide on one another are arranged so as to move radially against one another or so as to rotate against one another in a sliding motion.

5. Bellows-type air spring according to either of Claims 3 and 4, in which the annular sliding discs or sliding elements (8, 9, 12, 13, 16, 19, 22) arranged so as to slide on one another are composed of different materials, preferably of different low-friction plastics materials.

6. Bellows-type air spring according to one of Claims 1 to 5, in which the annular sliding discs or sliding elements (12, 13) are of asymmetrical design and cover further bellows regions of the folding-bellows-type air spring at least in one circular segment.

7. Bellows-type air spring, more particularly folding-bellows-type air spring, according to one of Claims 1 to 6, in which the annular sliding discs or sliding elements (8, 9, 12, 13, 16, 19, 20, 22) are of concave or convex design in cross section.

8. Bellows-type air spring, more particularly folding-bellows-type air spring, according to one of Claims 1 to 7, in which the annular sliding discs or sliding elements (8, 9, 12, 13, 16, 19, 20, 22) are designed to be so flexible that they come to rest on the bellows regions when a load is applied to the folding-bellows-type air spring.

9. Use of a bellows-type air spring according to one of Claims 1 to 8 for cushioning a vehicle running gear, more particularly as a secondary spring system for a rail vehicle or as a spring system of a motor vehicle.

## Revendications

1. Ressort pneumatique à soufflet (1, 15, 21) comprenant deux ou plus de parties de soufflet réalisées sous forme de pli ou de renflement (2, 3), lesquelles parties de soufflet étant séparées par des bagues (5), en particulier des bagues métalliques, placées autour du soufflet de ressort pneumatique (4), le ressort pneumatique à soufflet étant fixé entre une masse suspendue et une masse non suspendue, à l'aide de parties de raccordement (6, 7, 18, 24, 25, 26) et le soufflet (17, 23) faisant saillie vers l'extérieur à la manière d'un ballon entre les parties de raccordement, ou les plis ou les renflements (2, 3) du soufflet faisant saillie vers l'extérieur à la manière d'un ballon entre les bagues (5) ou à proximité de celles-ci, **caractérisé en ce que** des éléments de glissement annulaires (8, 9, 12, 13, 16, 20, 22), en particulier des éléments de glissement réalisés sous forme de disques de glissement, sont disposés entre des parties de soufflet adjacentes l'une à l'autre et/ou entre des parties de soufflet et des parties de raccordement, contre lesquels éléments de glissement s'appliquent les parties de soufflet ou les plis ou les renflements sous la contrainte du ressort pneumatique à soufflet plissé, dans lequel au moins deux disques de glissement annulaires respectifs (8, 9, 12, 13) disposés de manière glissante les uns sur les autres, dont le diamètre intérieur est supérieur au diamètre extérieur des bagues séparant les plis ou les renflements, sont disposés entre des plis ou des renflements adjacents.

2. Ressort pneumatique à soufflet (1, 15, 21) comprenant deux ou plus de parties de soufflet réalisées sous forme de pli ou de renflement (2, 3), lesquelles parties de soufflet étant séparées par des bagues (5), en particulier des bagues métalliques, placées autour du soufflet de ressort pneumatique (4), le ressort pneumatique à soufflet étant fixé entre une masse suspendue et une masse non suspendue, à l'aide de parties de raccordement (6, 7, 18, 24, 25, 26) et le soufflet (17, 23) faisant saillie vers l'extérieur à la manière d'un ballon entre les parties de raccordement, ou les plis ou les renflements (2, 3) du soufflet faisant saillie vers l'extérieur à la manière d'un ballon entre les bagues (5) ou à proximité de celles-ci, **caractérisé en ce que** des éléments de glissement annulaires (8, 9, 12, 13, 16, 20, 22), en particulier des éléments de glissement réalisés sous forme de disques de glissement, sont disposés entre des parties de soufflet adjacentes l'une à l'autre et/ou entre des parties de soufflet et des parties de raccordement, contre lesquels éléments de glissement s'appliquent les parties de soufflet ou les plis ou les renflements sous la contrainte du ressort pneumatique à soufflet plissé, dans lequel soit au moins deux disques de glissement annulaires (8, 9, 12, 13) disposés de manière glissante les uns sur les autres soit au moins un disque de glissement (19) et un élément de glissement supplémentaire (16) en forme de couvercle sont disposés respectivement entre des parties de soufflet et des parties de raccordement, contre lesquels disques de glissement s'appliquent les parties de soufflet sous la contrainte du ressort pneumatique à soufflet plissé.

3. Ressort pneumatique à soufflet selon la revendication 1 ou 2, dans lequel les éléments de glissement ou les disques de glissement annulaires (8, 9, 12, 13, 16, 19, 20, 22) sont constitués d'un matériau, de préférence d'un matériau plastique glissant, qui présente, dans le couple frottant avec lui-même ou avec le matériau du ressort pneumatique à soufflet, un coefficient de frottement inférieur à celui du matériau du ressort pneumatique à soufflet dans le couple frottant avec lui-même ou avec le matériau des parties de raccordement.

4. Ressort pneumatique à soufflet selon la revendication 3, dans lequel les disques de glissement ou les éléments de glissement annulaires (8, 9, 12, 13) disposés de manière glissante les uns sur les autres sont disposés de manière à pouvoir se déplacer radialement par glissement les uns par rapport aux autres ou de manière à pouvoir pivoter par glissement les uns par rapport aux autres.

5. Ressort pneumatique à soufflet selon l'une quelconque des revendications 3 ou 4, dans lequel les disques de glissement ou les éléments de glissement annulaires (8, 9, 12, 13, 16, 19, 22) disposés de manière glissante les uns sur les autres sont constitués de matériaux différents, de préférence de matériaux plastiques glissants différents.

6. Ressort pneumatique à soufflet selon l'une quelconque des revendications 1 à 5, dans lequel les disques de glissement ou les éléments de glissement annulaires (12, 13) sont réalisés de manière asymétrique et recouvrent au moins dans un segment de cercle d'autres régions de soufflet du ressort pneumatique à soufflet plissé.

7. Ressort pneumatique à soufflet, en particulier ressort pneumatique à soufflet plissé, selon l'une quelconque des revendications 1 à 6, dans lequel les disques de glissement ou les éléments de glissement annulaires (8, 9, 12, 13, 16, 19, 20, 22) sont réalisés de manière concave ou convexe en section transversale.

8. Ressort pneumatique à soufflet, en particulier ressort pneumatique à soufflet plissé, selon l'une quelconque des revendications 1 à 7, dans lequel les disques de glissement ou les éléments de glissement annulaires (8, 9, 12, 13, 16, 19, 20, 22) sont réalisés de manière flexible de telle sorte qu'ils s'appliquent contre les régions de soufflet sous la contrainte du ressort pneumatique à soufflet plissé.

9. Utilisation d'un ressort pneumatique à soufflet selon l'une quelconque des revendications 1 à 8 pour la suspension d'un train de roulement de véhicule, en particulier comme suspension secondaire d'un véhicule ferroviaire ou comme suspension d'un véhicule automobile.
